# FASCICULE DE BREVET EUROPEEN

(11) **EP 1 022 833 B1**
(45) Date de publication et mention de la délivrance du brevet: **16.09.2009**
(21) Numéro de dépôt: 00400143.4
(22) Date de dépôt: 20.01.2000
(51) Int. Cl.: H02G 3/18

(54) **Adaptateur pour support de mécanisme, et support de mécanisme équipé d'au moins un tel adaptateur, notamment pour appareillage électrique**
Adapter für einen Mechanismusträger, und Mechanismusträger mit einem solchen Adapter, inbesondere für ein Elektrogerät
Adapter for a mecanism carrier, and mecanism carrier with such an adapter, especially for electrical apparatus

(30) Priorité: 20.01.1999 FR 9900560
(43) Date de publication de la demande: 26.07.2000
(73) Titulaire: Legrand France, 87000 Limoges (FR)
(72) Inventeur: Morisot, Louis, 38160 Chatte (FR); Soldano, Mathieu, 38400 Saint-Martin d'Heres (FR)
(74) Mandataire: Santarelli

(56) Documents cités:
- DE-A- 2 648 084
- FR-A- 2 665 326
- FR-A- 2 727 260
- FR-A- 2 764 767

## Description

La présente invention concerne d'une manière générale les supports de mécanisme du type de ceux mis en oeuvre pour rapporter un quelconque mécanisme, et, par exemple, le mécanisme d'un quelconque appareillage électrique, tel que par exemple un interrupteur ou un socle de prise de courant, sur une quelconque boîte, qu'il s'agisse, par exemple, d'une boîte d'encastrement, lorsque l'appareillage concerné doit être implanté au sein même d'une quelconque paroi, ou qu'il s'agisse d'un boîtier, lorsque cet appareillage doit au contraire être rapporté en saillie sur une telle paroi.

Ainsi qu'on le sait, ces supports de mécanisme, qui, à ce jour, sont le plus souvent en métal, sont en forme générale de cadre, et ils présentent, extérieurement, un contour globalement quadrangulaire.

Pour leur fixation à une boîte d'encastrement ou à un boîtier, ils comportent, notamment, deux évidements, qui interviennent, chacun respectivement, dans la zone médiane de deux côtés opposés, et qui sont chacun propres au passage d'un quelconque organe de fixation, en pratique une simple vis.

Il s'agit, par exemple, de simples perçages en trou de serrure dont la partie allongée est cintrée en s'étendant circonférentiellement autour du centre de l'ensemble.

A ce jour, ces évidements sont établis suivant une horizontale.

Autrement dit, ils affectent chacun respectivement les deux côtés destinés à s'étendre verticalement sur la paroi concernée.

Lors de la mise en oeuvre de tels supports de mécanisme, divers problèmes sont susceptibles de se présenter, qui ont trait à leur éventuelle juxtaposition et/ou à leur fixation.

S'agissant, tout d'abord, de leur éventuelle juxtaposition, et, plus précisément, de leur éventuelle juxtaposition suivant une verticale, il s'avère que, les dispositions usuelles en la matière n'étant pas les mêmes dans tous les pays, cette juxtaposition doit à ce jour pouvoir se faire suivant l'un ou l'autre de deux entraxes différents.

Sans autre, il est, donc nécessaire, à ce jour, de prévoir, systématique, au prix d'un doublement des références, et, donc, au détriment des coûts, des supports de mécanisme de deux types différents, à savoir, d'une part, des supports de mécanisme présentant extérieurement des dimensions adaptées à un premier entraxe, et, d'autre part, des supports de mécanisme présentant extérieurement des dimensions adaptées à un premier entraxe, et, d'autre part, des supports de mécanisme présentant extérieurement des dimensions adaptées à un deuxième entraxe supérieur au précédent.

En pratique, les premiers ont, extérieurement, un contour globalement rectangulaire, tandis que les deuxièmes ont, extérieurement, un contour globalement carré.

Pour éviter le doublement correspondant, il a été proposé, dans le brevet français qui, déposé le 22 novembre 1994 sous le No 94 13943, a été publié sous le No 2 727 260, un support de mécanisme comportant, sur chacun de deux côtés opposés, un prolongement détachable formant adaptateur.

Lorsque l'entraxe à respecter est le plus grand, le prolongement correspondant de chacun des deux supports de mécanisme à juxtaposer est conservé.

Il est éliminé, lorsque l'entraxe à respecter est le plus petit.

Cette disposition donne satisfaction.

Mais elle n'est bien adaptée qu'au cas où les supports de mécanisme en cause sont en matière frangible, et, plus précisément, en matière synthétique communément dite plastique.

S'agissant de la fixation, il résulte, de l'implantation sur une horizontale des évidements éventuellement utilisés, que les boîtes à équiper doivent également présenter sur une horizontale les fûts tubulaires propres à recevoir alors les organes de fixation nécessaires.

Or il s'avère que, pour certains appareillages, ont été développées des boîtes sur lesquelles ces fûts tubulaires sont au contraire établis suivant une verticale, les supports de mécanisme correspondants étant, eux, adaptés en conséquence.

Il est donc impossible, à ce jour, de rapporter sur une telle boîte un support de mécanisme dont, traditionnellement, les évidements sont établis suivant une horizontale, au détriment de la souplesse de mise en oeuvre, pourtant souhaitable, des boîtes et/ou des supports de mécanisme en cause.

La présente invention a d'une manière générale pour objet une disposition permettant de surmonter de manière très simple ces difficultés.

De manière plus précise, elle a pour objet un support de mécanisme comportant un cadre de contour extérieur globalement quadrangulaire et au moins une barrette allongée, ladite barrette comportant le long de l'un au moins de ses bords longitudinaux, des moyens d'engagement propres à permettre de rapporter ladite barrette sur ledit cadre, caractérisé en ce que ladite barrette est engagée sur ledit cadre par les moyens d'engagement de façon désengageable et forme un adaptateur pour ledit support, lesdits moyens d'engagement comportant au moins une paire de pattes, qui, décalées longitudinalement l'une par rapport à l'autre, sont également décalées transversalement en épaisseur d'adaptateur l'une par rapport à l'autre, ledit cadre comporte sur chacun de deux côtés opposés, au moins une paire de pattes, qui, décalées longitudinalement l'une par rapport à l'autre, sont également décalées transversalement en épaisseur du support l'une par rapport à l'autre, et les pattes de la barrette sont établies en correspondance avec les pattes du cadre précédentes, et conjuguées avec ces dernières.

Les pattes de la barrette sont ainsi adaptées à pouvoir s'engager, l'une sur le support de mécanisme à équiper, l'autre sous ce support de mécanisme, sont aptes à pincer légèrement ce support de mécanisme, et, donc, à assurer le maintien de l'adaptateur par rapport à celui-ci.

Il est ainsi avantageusement être tiré parti d'une disposition connue suivant laquelle, tel que décrit par exemple dans le brevet qui, déposé le 24 juillet 1990 sous le No 90 09452, a été publié sous le No 2 665 326, certains supports de mécanisme sont eux-mêmes équipés, sur chacun de deux côtés opposés, pour leur éventuel jumelage, d'au moins une paire de pattes, qui, décalées longitudinalement l'une par rapport à l'autre, sont elles aussi également décalées transversalement en épaisseur l'une par rapport à l'autre.

Quelle que soit la nature des moyens d'engagement dont il est doté, l'adaptateur suivant l'invention permet avantageusement une juxtaposition verticale de deux supports de mécanisme suivant l'un ou l'autre de deux entraxes différents.

En effet, partant de supports de mécanisme de contour extérieur rectangulaire propres à une juxtaposition suivant le plus petit de ces entraxes, il suffit de mettre en oeuvre entre eux une barrette suivant l'invention pour que leur juxtaposition puisse se faire suivant le plus grand.

Préférentiellement, dans ce cas, l'adaptateur suivant l'invention comporte des moyens d'engagement le long de chacun de ses bords longitudinaux, pour sa solidarisation à l'un et l'autre des supports de mécanisme à relier.

Par ailleurs, pour rapporter, sur une boîte dont les fûts tubulaires sont établis suivant une verticale, un cadre de support de mécanisme dont les évidements correspondants sont, eux, établis suivant une horizontale, il suffit de rapporter, sur ce cadre de support de mécanisme, le long de chacun des deux autres côtés de celui-ci, une barrette suivant l'invention.

Dans ce cas, cette barrette comporte, elle-même, dans sa zone médiane, au moins un évidement propre au passage d'un quelconque organe de fixation, et cet évidement est mis à profit pour la fixation recherchée.

Corollairement, le contour extérieur du support de mécanisme se trouve modifié.

Par exemple, de globalement rectangulaire ce contour extérieur devient globalement carré.

En bref, le support de mécanisme suivant l'invention permet avantageusement de satisfaire à diverses situations de mise en oeuvre pour lesquelles les supports de mécanisme concernés n'ont pas été initialement prévus ou ne sont pas directement conçus, au bénéfice d'une plus grande souplesse d'emploi pour ces supports de mécanisme.

Selon d'autres caractéristiques :
- ladite barrette s'étend le long d'un des côtés dudit cadre ;
- ladite barrette s'étend sur toute la longueur du côté concerné,
- l'une des pattes de chaque paire de pattes de ladite barrette s'étend sensiblement suivant son plan, tandis que l'autre est décalée par rapport à celui-ci ;
- les moyens d'engagement de ladite barrette comportent, à distance l'une de l'autre, deux paires de pattes, et le cadre comporte une paire de pattes au voisinage de chacune des extrémités de deux côtés opposés ;
- dans ladite barrette, les deux paires de pattes sont chacune respectivement disposées à proximité de ses extrémités ;
- dans ladite barrette, les pattes extrêmes sont à un même niveau, et les pattes intermédiaires sont elles-mêmes à un même niveau, différent du précédent ;
- dans ladite barrette, il y a une alternance de pattes d'un premier niveau et de pattes d'un deuxième niveau différent du précédent ;
- entre ces deux paires de pattes, ladite barrette comporte au moins une languette pour chevaucher localement le cadre ;
- le cadre comporte, dans la zone médiane de chacun de deux côtés opposés, un évidement propre au passage d'un quelconque organe de fixation ; une dite barrette s'étend le long de ses deux autres côtés, chaque barrette comportant, dans sa zone médiane, au moins un évidement propre au passage dans ladite barrette d'un quelconque organe de fixation
- de l'une à l'autre des deux barrettes, l'entraxe intervenant entre les évidements est sensiblement le même que celui intervenant entre les évidements du cadre ;
- l'autre des bords longitudinaux de ladite barrette est sensiblement lisse et rectiligne ;
- ladite barrette comporte des moyens d'engagement le long de chacun de ses bords longitudinaux.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un support de mécanisme susceptible de recevoir au moins un adaptateur suivant l'invention ;
la figure 2 est, en correspondance avec la figure 1, une vue en perspective d'un tel adaptateur;
les figures 3 et 4 sont, à échelle supérieure, des vues en coupe transversale de cet adaptateur, suivant, chacune respectivement, les lignes III-III et IV-IV de la figure 2;
la figure 5 est une vue de dessus du support de mécanisme représenté à la figure 1, avec, sur chacun de deux côtés opposés de ce support de mécanisme, un adaptateur suivant l'invention;
les figures 6 et 7 sont des vues en perspective qui, analogues, chacune respectivement, à celles des figures 1 et 2, se rapportent à une variante de réalisation ;
la figure 8 est une vue en coupe longitudinale de l'adaptateur correspondant, suivant la ligne VIII-VIII de la figure 7;
la figure 9 est une vue en perspective qui, analogue à celles des figures 2 et 7, se rapporte à un autre adaptateur suivant l'invention ;
la figure 10 est une vue de dessus qui, analogue à celle de la figure 5, illustre la mise en oeuvre de cet autre adaptateur.

Tel qu'illustré sur ces figures, le support de mécanisme 10 auquel est plus particulièrement destinée l'invention se présente sous la forme générale d'un cadre.

Il s'agit, plus précisément, d'une platine, dont le contour extérieur est globalement quadrangulaire, et qui, dans sa zone médiane, est ajourée par une ouverture centrale 11.

Dans les formes de réalisation représentées, cette ouverture centrale 11 a, elle-même, un contour globalement quadrangulaire, et, sur une partie au moins de son pourtour, elle est bordée par un bord tombé 12.

Dans la zone médiane de chacun de deux côtés 13A opposés, le support de mécanisme 10 présente un évidement 14 propre au passage d'un quelconque organe de fixation non représenté, en pratique une simple vis.

Dans les formes de réalisation représentées, cet évidement 14 est en trou de serrure, et, pour un éventuel réglage d'aplomb, sa partie allongée s'étend circonférentiellement, en étant centrée sur le centre C de l'ensemble.

D'un côté 13A à l'autre, les évidements 14 sont disposés tête-bêche.

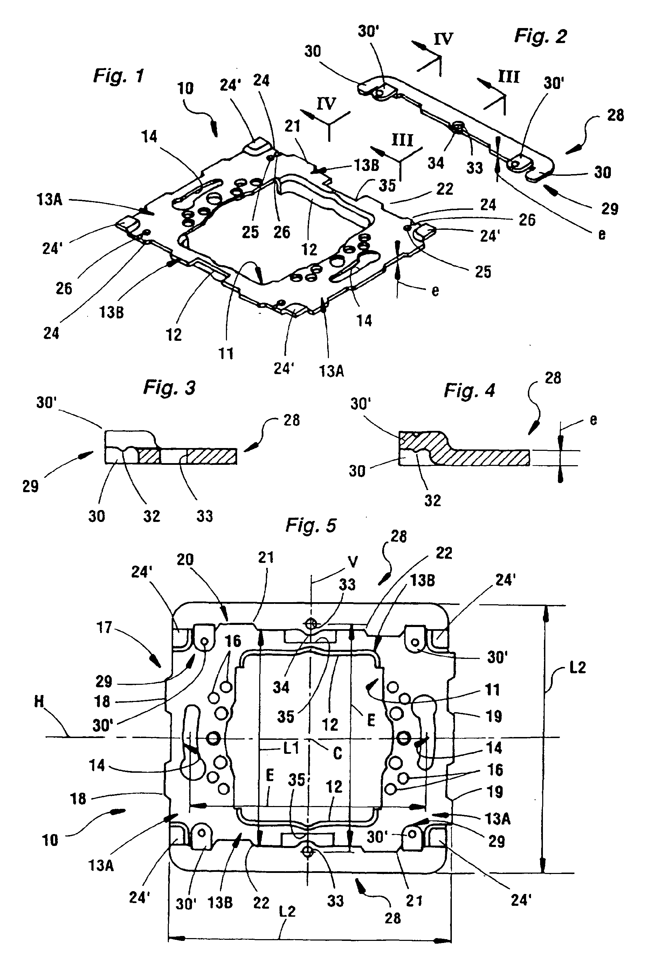

En pratique, et tel que schématisé en traits interrompus sur la figure 5, ces évidements 14 sont établis suivant une même horizontale H.

Autrement dit, les côtés 13A qu'ils affectent sont destinés, eux, a s'étendre verticalement.

Soit E l'entraxe de ces évidements 14, mesuré au niveau de l'horizontale H.

Bien entendu, et cela est le cas, notamment, dans la forme de réalisation plus particulièrement représentée sur les figures 1 à 5, les côtés 13A du support de mécanisme 10 peuvent présenter, pour des raisons diverses qui n'ont pas à être explicitées ici, d'autres évidements ou perçages 16.

Dans les formes de réalisation représentées, les côtés 13A du support de mécanisme 10 forment, le long de leur bord, des moyens d'emboîtement 17, propres à un jumelage horizontal d'un support de mécanisme 10 avec un autre.

Dans la forme de réalisation plus particulièrement représentée sur les figures 1 à 5, ces moyens d'emboîtement 17 comportent, d'une part, sur l'un des côtés 13A, deux bossages 18, qui, établis à distance l'un de l'autre, font saillie sur la tranche de ce côté 13A, dans le prolongement de celui-ci, et, d'autre part, sur l'autre des côtés 13A, deux encoches 19, qui, établies en correspondance avec les bossages 18 précédents, affectent, elles, en creux, la tranche de cet autre côté 13A.

Bien entendu, des moyens d'emboîtement 20 de même type ou de type analogue peuvent être prévus sur les autres côtés 13B du support de mécanisme 10.

Cela est le cas, précisément, dans la forme de réalisation plus particulièrement représentée sur les figures 1 à 5.

En pratique, dans cette forme de réalisation, ces moyens d'emboîtement 20 comportent, sur chacun des côtés 13B, un bossage 21 et une encoche 22, qui sont établis à distance l'un de l'autre, et dont la disposition est alternée d'un de ces côtés 13B à l'autre.

Soit L1 la longueur des côtés 13A du support de mécanisme 10 abstraction faite du bossage 21 et de l'encoche 22 de ses côtés 13B, et soit L2 la longueur de ces côtés 13B abstraction faite des bossages 18 et des encoches 19 des côtés 13A.

En pratique, la longueur L1 est inférieure à la longueur L2.

Dans les formes de réalisation représentées, le support de mécanisme 10 comporte, sur chacun de deux côtés opposés, en l'espèce les côtés 13B, au moins une paire de pattes 24, 24', qui, décalées longitudinalement l'une par rapport à l'autre le long d'un tel côté 13B, sont également décalées transversalement en épaisseur l'une par rapport à l'autre, perpendiculairement au plan de l'ensemble.

Plus précisément, dans ces formes de réalisation, le support de mécanisme 10 comporte une paire de pattes 24, 24' au voisinage de chacune des extrémités de ses deux côtés 13B opposés.

Pour chacune des paires de pattes 24, 24', les pattes 24, 24' sont adjacentes l'une à l'autre, ou sensiblement adjacentes l'une à l'autre.

Par exemple, et tel que représenté, la patte 24 s'étend sensiblement suivant le plan même du support de mécanisme 10, tandis que la patte 24' est décalée par rapport à la patte 24.

Dans les formes de réalisation représentées, la patte 24' est donc surélevée par rapport à la partie courante du support de mécanisme 10, et, donc, par rapport à la patte 24 associée.

Dans la forme de réalisation plus particulièrement représentée sur les figures 1 à 5, il y a une patte 24' dans chacun des angles du support de mécanisme 10, et la patte 24 associée s'étend sensiblement dans le contour hors tout de celui-ci, sans y être autrement individualisée que par la présence proche d'un bossage 21 ou d'une encoche 22.

En outre, dans cette forme de réalisation, chacune des pattes 24 comporte, en creux, un dégagement d'emboîtement 25, et celui-ci est précédé d'un chanfrein d'engagement 26.

Sauf en ce qui concerne la disposition relative des pattes 24, 24', les dispositions qui précèdent sont bien connues par elles-mêmes, et, ne relevant pas en propre de la présente invention, elles ne seront pas décrites plus en détail ici.

Le support de mécanisme 10 est, par exemple, en métal.

Soit e son épaisseur, ou, plus précisément, l'épaisseur du flan initial, et, donc, celle de sa partie courante.

En pratique, pour chacune des paires de pattes 24, 24', la patte 24' est décalée de cette épaisseur e par rapport à la patte 24.

Suivant l'invention, il est associé, au support de mécanisme 10, au moins un adaptateur 28.

Globalement, cet adaptateur 28 se présente sous la forme générale d'une barrette allongée, et il comporte, le long de l'un au moins de ses bords longitudinaux, suivant des dispositions décrites plus en détail ultérieurement, des moyens d'engagement 29 propres à permettre de le rapporter sur un support de mécanisme 10.

Dans la forme de réalisation plus particulièrement représentée sur les figures 1 à 5, l'adaptateur 28 ne comporte des moyens d'engagement 29 que sur l'un de ses bords longitudinaux, et l'autre de ses bords longitudinaux est sensiblement lisse et rectiligne, avec, cependant, des congés de raccordement arrondis à ses extrémités.

Comme le support de mécanisme 10, l'adaptateur 28 est, par exemple, en métal.

Préférentiellement, il a une épaisseur e égale à celle de ce support de mécanisme 10.

Dans les formes de réalisation représentées, les moyens d'engagement 29 dont est doté l'adaptateur 28 comportent au moins une paire de pattes 30, 30', qui, décalées longitudinalement l'une par rapport à l'autre suivant sa longueur, sont également décalées transversalement en épaisseur l'une par rapport à l'autre, perpendiculairement à son plan.

En pratique, dans ces formes de réalisation, ces moyens d'engagement 29 comportent, à distance l'une de l'autre, deux paires de pattes 30, 30', qui sont chacune respectivement disposées à proximité des extrémités de l'adaptateur 28.

En pratique, également, ces paires de pattes 30, 30' sont établies en correspondance avec les pattes 24, 24' du support de mécanisme 10, et elles sont conjuguées avec ces dernières.

Comme pour le support de mécanisme 10, l'une des pattes de chaque paire de pattes 30, 30', en l'espèce la patte 30, s'étend sensiblement suivant le plan de l'adaptateur 28, tandis que l'autre, et, donc, en l'espèce, la patte 30', est décalée de l'épaisseur e par rapport à celui-ci.

Dans la forme de réalisation plus particulièrement représentée sur les figures 1 à 5, la patte 30' est ainsi surélevée par rapport à la partie courante de l'adaptateur 28, et, donc, par rapport à la patte 30 associée.

En outre, dans cette forme do réalisation, il y a une patte 30 à chacune des extrémités de l'adaptateur 28, et les pattes 30' s'étendent donc à distance de celles-ci.

Autrement dit, dans cotte forme de réalisation, les pattes extrêmes, qui sont les pattes 30, sont à un même niveau, et les pattes intermédiaires, qui sont les pattes 30', sont elles-mêmes à un même niveau, différent du précédent d'un décalage égal à l'épaisseur e.

Préférentiellement, et cela est le cas dans la forme de réalisation représentée, chacune des pattes 30' présente, en saillie sur sa surface inférieure, un bossage d'emboîtement 32 complémentaire du dégagement d'emboîtement 25 des pattes 24 du support de mécanisme 10.

Par exemple, et tel que représenté, ce bossage d'emboîtement 32 résulte d'un simple estampage des pattes 30'.

Dans la forme de réalisation plus particulièrement représentée sur les figures 1 à 5, l'adaptateur 28 suivant l'invention comporte, on outre, dans sa zone médiane, au moins un évidement 33 propre au passage d'un quelconque organe de fixation non représenté, on pratique une vis.

Par exemple, et tel que représenté, seul un tel évidement 33 est prévu, et il s'agit d'un simple perçage de contour circulaire.

Dans la forme de réalisation représentée, cet évidement 33 est ménagé à la faveur d'un prolongement transversal local 34 de l'adaptateur 28, et, en correspondance, le support de mécanisme 10 comporte, dans la zone médiane do chacun de ses côtés 13B, entre le bossage 21 et l'encoche 22 de celui-ci, pour l'engagement du prolongement transversal local 34 d'un adaptateur 28, une échancrure 35.

En pratique, dans la forme de réalisation plus particulièrement représentée sur les figures 1 à 5, l'adaptateur 28 associé au support de mécanisme 10 s'étend le long d'un de ses côtés 13B.

Préférentiellement, et tel que représenté, l'adaptateur 28 s'étend sur toute la longueur du côté 13B concerné du support de mécanisme 10.

En pratique, dans la forme de réalisation représentée, il est associé, au support de mécanisme 10, deux adaptateurs 28, qui s'étendent chacun respectivement le long de ses deux côtés 13B, c'est-à-dire le long de ses côtés autres que ceux présentant un évidement 14.

Pour chacun des côtés 13B du mécanisme 10, l'adaptateur 28 s'engage, par ses pattes 30, sous les pattes 24' de ce support de mécanisme 10, et, par ses pattes 30', sur les pattes 24 de celui-ci, le bossage d'emboîtement 32 de ses pattes 30' venant en prise avec le dégagement d'emboîtement 25 des pattes 24 du support de mécanisme 10, pour un verrouillage débrayable de l'ensemble.

Les deux adaptateurs 28 ainsi rapportés sur le support de mécanisme 10 sont dès lors dûment assujettis à celui-ci, et l'ensemble peut être manipulé en tant que tel, sans risque de désolidarisation.

De l'un à l'autre des deux adaptateurs 28, les évidements 33 sont établis suivant une même verticale V, tel que schématisé en traits interrompus sur la figure 5, et l'entraxe E intervenant entre ces évidements 33 est sensiblement le même que celui intervenant entre les propres évidements 14 du support de mécanisme 10.

En outre, de l'un à l'autre de ces deux adaptateurs 28, la distance hors tout de l'ensemble, mesurée entre leurs bords libres respectifs, est sensiblement égale à la longueur L2 des côtés 13B du support de mécanisme 10.

Autrement dit, lorsqu'il est ainsi équipé de deux adaptateurs 28, le support de mécanisme 10 a un contour extérieur globalement carré, au lieu d'être, comme précédemment, globalement rectangulaire.

Quoi qu'il en soit, grâce à ces adaptateurs 28, et, plus précisément, grâce à l'évidement 33 de ceux-ci, le support de mécanisme 10 peut être rapporté sur une boîte dont les fûts tubulaires correspondants sont établis suivant une verticale au lieu d'être établis suivant une horizontale.

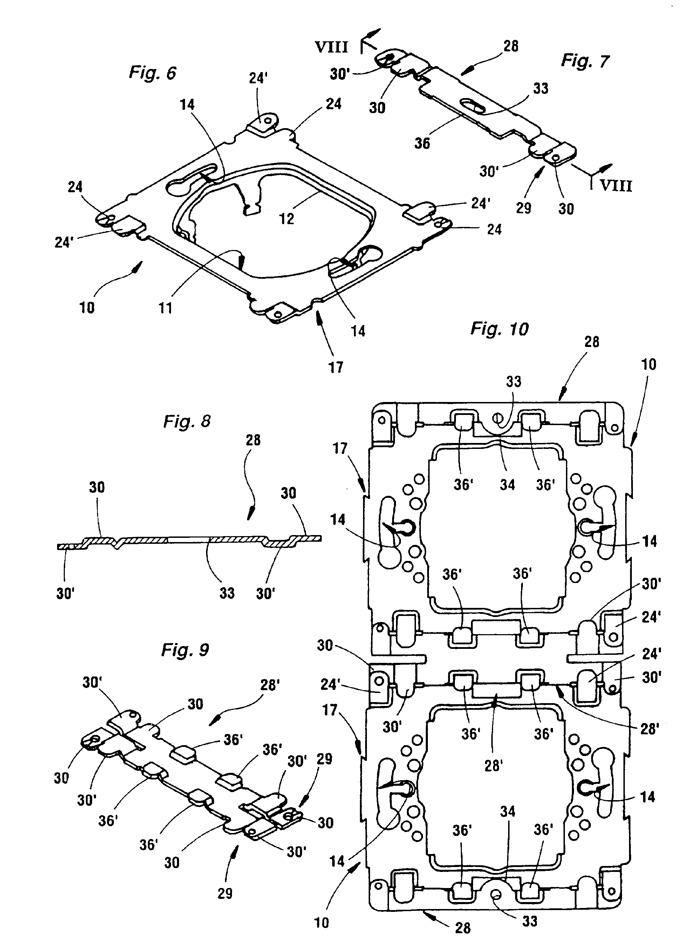

Dans la forme de réalisation plus particulièrement représentée sur les figures 6 à 8, l'évidement 33 de l'adaptateur 28 est allongé en boutonnière suivant sa longueur.

En outre, dans cette forme de réalisation, il y a une alternance de pattes 30 d'un premier niveau et de pattes 30' d'un deuxième niveau différent du précédent.

Autrement dit, dans cette forme de réalisation, il y a, à l'une des extrémités de l'adaptateur 28, une patte 30 qui s'étend suivant sensiblement le plan de cet adaptateur 28, et, à l'autre extrémité de celui-ci, une patte 30' qui est décalée de l'épaisseur e par rapport à la précédente.

En correspondance, une disposition de même type est adoptée pour les pattes 24, 24' du support de mécanisme 10.

En pratique, dans la forme de réalisation représentée, chaque patte 30' de l'adaptateur 28 est surbaissée par rapport à la partie courante de celui-ci, et, donc, par rapport à la patte 30 associée.

Enfin, dans cette forme de réalisation, l'adaptateur 28 comporte, entre ses deux paires de pattes 30, 30', au moins une languette 36 par laquelle il est apte à chevaucher localement le support de mécanisme 10.

Par exemple, et tel que représenté, seule une languette 36 est prévue, et elle s'étend longitudinalement de part et d'autre de l'évidement 33.

Pour le reste, les dispositions sont du même type que celles précédemment décrites.

Dans la forme de réalisation plus particulièrement représentée sur les figures 9 et 10, un adaptateur 28' suivant l'invention comporte des moyens d'engagement 29 le long de chacun de ses bords longitudinaux.

Il est ainsi apte à intervenir à la manière d'une entretoise entre deux supports de mécanisme 10 établis suivant une verticale, tel que représenté sur la figure 10.

Dans la forme de réalisation représentée, les moyens d'engagement 29 sont du type de ceux décrits en référence aux figures 6 à 8 quant à l'implantation relative des pattes 30, 30' correspondantes.

Toutefois, dans cette forme de réalisation, les pattes 30' sont surélevées par rapport à la partie courante de l'adaptateur 28', et, donc, par rapport aux pattes 30 associées, comme dans la forme de réalisation représentée sur les figures 1 à 5.

Enfin, dans cette forme de réalisation, l'adaptateur 28 comporte, entre ses deux paires de pattes 30, 30', deux languettes 36', qui s'étendent à distance l'une de l'autre, et par chacune desquelles il est apte à chevaucher localement le support de mécanisme 10 correspondant.

Pour le reste, les dispositions sont du même type que celles précédemment décrites.

Mais, dans la forme de réalisation représentée, l'adaptateur 28' est dépourvu de tout évidement.

On notera, cependant, que, sur la figure 10, les deux supports de mécanisme 10 sont chacun équipés, le long de celui de leurs côtés 13B opposé à celui le long duquel intervient l'adaptateur 28', d'un adaptateur 28 présentant, lui, comme précédemment, un évidement 33.

On notera, également, que, dans la forme de réalisation représentée, cet adaptateur 28 présente deux languettes 36' disposées chacune respectivement de part et d'autre du prolongement transversal local 34 correspondant.

Bien entendu, la présente invention ne se limite pas aux formes de réalisation décrites et représentées, mais englobe toute variante d'exécution et/ou de combinaison de leurs divers éléments.

## Revendications

1. Support de mécanisme comportant un cadre (10) de contour extérieur globalement quadrangulaire et au moins une barrette allongée (28, 28'), ladite barrette (28, 28') comportant le long de l'un au moins de ses bords longitudinaux, des moyens d'engagement (29) propres à permettre de rapporter ladite barrette (28, 28') sur ledit cadre (10), **caractérisé en ce que** ladite barrette (28, 28') est engagée sur ledit cadre (10) par les moyens d'engagement (29) de façon désengageable et forme un adaptateur pour ledit support, lesdits moyens d'engagement (29) comportent au moins une paire de pattes (30, 30'), qui, décalées longitudinalement l'une par rapport à l'autre, sont également décalées transversalement en épaisseur d'adaptateur l'une par rapport à l'autre, ledit cadre (10) comporte sur chacun de deux côtés (13B) opposés, au moins une paire de pattes (24 , 24'), qui, décalées longitudinalement l'une par rapport à l'autre, sont également décalées transversalement en épaisseur du support l'une par rapport à l'autre, et les pattes (30, 30') de la barrette (28, 28') sont établies en correspondance avec les pattes (24, 24') du cadre (10) précédentes, et conjuguées avec ces dernières.

2. Support de mécanisme suivant la revendication 1, **caractérisé en ce que** ladite barrette (28, 28') s'étend le long d'un des côtés (13B) dudit cadre (10).

3. Support de mécanisme suivant la revendication 2, **caractérisé en ce que** ladite barrette (28, 28') s'étend sur toute la longueur du côté (13B) concerné.

4. Support de mécanisme suivant la revendication 1, **caractérisé en ce que** l'une des pattes (30) de chaque paires de pattes (30, 30') de ladite barrette (28, 28') s'étend sensiblement suivant son plan, tandis que l'autre (30') est décalée par rapport à celui-ci.

5. Support de mécanisme suivant la revendication 1, **caractérisé en ce que** les moyens d'engagement (29) de ladite barrette (28, 28') comportent, à distance l'une de l'autre, deux paires de pattes (30, 30'), et le cadre (10) comporte une paire de pattes (24, 24') au voisinage de chacune des extrémités de deux côtés (13B) opposés.

6. Support de mécanisme suivant la revendication 5, **caractérisé en ce que** dans ladite barrette (28, 28'), les deux paires de pattes (30, 30') sont chacune respectivement disposées à proximité de ses extrémités.

7. Support de mécanisme suivant la revendication 5, **caractérisé en ce que**, dans ladite barrette (28, 28'), les pattes (30) extrêmes sont à un même niveau, et les pattes (30') intermédiaires sont elles-mêmes à un même niveau, différent du précédent.

8. Support de mécanisme suivant la revendication 5, **caractérisé en ce que**, dans ladite barrette (28, 28'), il y a une alternance de pattes (30) d'un premier niveau et de pattes (30') d'un deuxième niveau différent du précédent.

9. Support de mécanisme suivant la revendication 5, **caractérisé en ce que**, entre ces deux paires de pattes (30, 30'), ladite barrette (28, 28') comporte au moins une languette (36, 36') pour chevaucher localement le cadre (10).

10. Support de mécanisme suivant la revendication 1, **caractérisé en ce que** le cadre (10) comporte, dans la zone médiane de chacun de deux côtés (13A) opposés, un évidement (14) propre au passage d'un quelconque organe de fixation, et **en ce qu'**une dite barrette (28) s'étend le long de ses deux autres côtés (13B), chaque barrette (28) comportant, dans sa zone médiane, au moins un évidement (33) propre au passage dans ladite barrette (28, 28') d'un quelconque organe de fixation.

11. Support de mécanisme suivant la revendication 10, **caractérisé en ce que**, de l'une à l'autre des deux barrettes (28), l'entraxe (E) intervenant entre les évidements (33) est sensiblement le même que celui intervenant entre les évidements (14) du cadre (10).

12. Support de mécanisme suivant la revendication 1, **caractérisé en ce que** l'autre des bords longitudinaux de ladite barrette (28) est sensiblement lisse et rectiligne.

13. Support de mécanisme suivant la revendication 1, **caractérisé en ce que** ladite barrette (28') comporte des moyens d'engagement (29) le long de chacun de ses bords longitudinaux.

## Claims

1. A mechanism support comprising a frame (10) of generally quadrangular external contour and at least one elongate bar portion (28, 28'), said bar portion (28, 28') comprising along one at least of its longitudinal edges engagement means (29) for permitting said bar portion (28, 28') to be fitted to said frame (10), **characterised in that** said bar portion (28, 28') is disengageably engaged on said frame (10) by the engagement means (29) and forms an adaptor for said support, said engagement means (29) comprising at least one pair of tabs (30, 30') which, being longitudinally displaced relative to each other, are also displaced transversely with respect to each other in relation to the adaptor thickness, said frame (10) comprises on each of two opposite sides (13B) at least one pair of tabs (24, 24') which, being longitudinally displaced with respect to each other, are also displaced transversely with respect to each other in respect of the thickness of the support, and the tabs (30, 30') of the bar portion (28, 28') are established in corresponding and conjugate relationship with the preceding tabs (24, 24') of the frame (10).

2. A mechanism support according to claim 1 **characterised in that** said bar portion (28, 28') extends along one of the sides (13B) of said frame (10).

3. A mechanism support according to claim 2 **characterised in that** said bar portion (28, 28') extends over the entire length of the side (13B) in question.

4. A mechanism support according to claim 1 **characterised in that** one of the tabs (30) of each pair of tabs (30, 30') of said bar portion (28, 28') extends substantially in the plane thereof while the other (30') is displaced with respect thereto.

5. A mechanism support according to claim 1 **characterised in that** the engagement means (29) of said bar portion (28, 28') comprise at a mutual spacing two pairs of tabs (30, 30') and the frame (10) comprises a pair of tabs (24, 24') in the vicinity of each of the ends of two opposite sides (13B).

6. A mechanism support according to claim 5 **characterised in that** in said bar portion (28, 28') the two pairs of tabs (30, 30') are each respectively disposed in the proximity of its ends.

7. A mechanism support according to claim 5 **characterised in that** in said bar portion (28, 28') the end tabs (30) are at the same level and the intermediate tabs (30') are themselves at the same level different from the preceding one.

8. A mechanism support according to claim 5 **characterised in that** in said bar portion (28, 28') there is an alternation of tabs (30) at a first level and tabs (30') at a second level different from the preceding one.

9. A mechanism support according to claim 5 **characterised in that** between said two pairs of tabs (30, 30') said bar portion (28, 28') comprises at least one tongue portion (36, 36') for locally fitting over the frame (10).

10. A mechanism support according to claim 1 **characterised in that** in the central zone of each of two opposite sides (30A) the frame (10) comprises an opening (14) for the passage of any fixing member and that said bar portion (28) extends along its other two sides (13B), each bar portion (28) in its central zone comprising at least one opening (33) for the passage in said bar portion (28, 28') of any fixing member.

11. A mechanism support according to claim 10 **characterised in that** from one of the two bar portions (28) to the other the centre-to-centre spacing (E) between the openings (33) is substantially the same as between the openings (14) in the frame (10).

12. A mechanism support according to claim 1 **characterised in that** the other of the longitudinal edges of said bar portion (28) is substantially smooth and straight.

13. A mechanism support according to claim 1 **characterised in that** said bar portion (28') comprises engagement means (29) along each of its longitudinal edges.

## Patentansprüche

1. Mechanismusträger mit einem Rahmen (10) mit einem allgemein quadratischen Außenumfang und wenigstens einer länglichen Leiste (28, 28'), wobei die Leiste (28, 28') entlang wenigstens eines ihrer Längsränder Einsteckmittel (29) aufweist, die es ermöglichen, die Leiste (28, 28') auf den Rahmen (10) aufzusetzen,
**dadurch gekennzeichnet, dass** die Leiste (28, 28') durch die Einsteckmittel (29) auf den Rahmen lösbar gesteckt ist und einen Adapter für den Träger bildet, wobei die Einsteckmittel (29) wenigstens ein Paar Laschen (30, 30') aufweisen, die in Längsrichtung zueinander versetzt quer in der Dicke des Adapters zueinander ebenfalls versetzt sind, wobei der Rahmen (10) auf jeder von zwei sich gegenüberliegenden Selten (13B) wenigstens ein Paar Laschen (24, 24') aufweist, die in Längsrichtung zueinander versetzt quer in der Dicke des Trägers zueinander ebenfalls versetzt sind, und die Laschen (30, 30') der Leiste (28, 28') in Übereinstimmung mit den vorstehenden Laschen (24, 24') des Rahmens (10) angeordnet und mit diesen verbunden sind.

2. Mechanismusträger nach Anspruch 1,
**dadurch gekennzeichnet, dass** sich die Leiste (28, 28') entlang einer der Seiten (13B) des Rahmens (10) erstreckt.

3. Mechanismusträger nach Anspruch 2,
**dadurch gekennzeichnet, dass** sich die Leiste (28, 28') über die gesamte Länge der betreffenden Seite (13B) erstreckt.

4. Mechanismusträger nach Anspruch 1,
**dadurch gekennzeichnet, dass** sich eine der Laschen (30) eines jeden Laschenpaars (30, 30') der Leiste (28, 28') im Wesentlichen längs ihrer Ebene erstreckt, während die andere (30') zu dieser versetzt ist.

5. Mechanismusträger nach Anspruch 1,
**dadurch gekennzeichnet, dass** die Einsteckmittel (29) der Leiste (28, 28') voneinander beabstandet zwei Laschenpaare (30, 30') aufweisen, und der Rahmen (10) ein Laschenpaar (24, 24') in der Nähe eines jeden Endes der beiden sich gegenüberliegenden Seiten (13B) aufweist.

6. Mechanismusträger nach Anspruch 5,
**dadurch gekennzeichnet, dass** die beiden Laschenpaare (30, 30') an der Leiste (28, 28') jeweils in der Nähe ihrer Enden angeordnet sind.

7. Mechanismusträger nach Anspruch 5,
**dadurch gekennzeichnet, dass** die äußersten Laschen (30) an der Leiste (28, 28') auf gleichem Niveau liegen, und die dazwischenliegenden Laschen (30') Ihrerseits auf gleichem Niveau liegen, das sich jedoch von dem vorhergehenden unterscheidet.

8. Mechanismusträger nach Anspruch 5,
**dadurch gekennzeichnet, dass** sich an der Leiste (28, 28') abwechselnd Laschen (30) eines ersten Niveaus und Laschen (30') eines vom vorhergehenden Niveau abweichenden zweiten Niveaus befinden.

9. Mechanismusträger nach Anspruch 5,
**dadurch gekennzeichnet, dass** die Leiste (28, 28') zwischen diesen beiden Laschenpaaren (30, 30') wenigstens eine Zunge (36, 36') aufweist, um den Rahmen (10) stellenweise zu überdecken.

10. Mechanismusträger nach Anspruch 1,
**dadurch gekennzeichnet, dass** der Rahmen (10) im mittleren Bereich jeder seiner beiden sich gegenüberliegenden Seiten (13B) eine Aussparung (14) aufweist, die zum Hindurchführen eines beliebigen Befestigungsorgans geeignet ist, und dass sich eine solche Leiste (28, 28') an dessen beiden anderen Seiten (13B) erstreckt, wobei jede Leiste (28) in ihrem mittleren Bereich wenigstens eine Aussparung (33) aufweist, die zum Hindurchführen eines beliebigen Befestigungsorgans durch die Leiste (28, 28') geeignet ist.

11. Mechanismusträger nach Anspruch 10,
**dadurch gekennzeichnet, dass** der Mittenabstand (E) zwischen den Aussparungen (33) von einer zur anderen der beiden Leiste (28) im Wesentlichen der gleiche ist wie zwischen den Aussparungen (14) des Rahmens (10).

12. Mechanismusträger nach Anspruch 1,
**dadurch gekennzeichnet, dass** der andere Längsrand der Leiste (28) im Wesentlichen glatt und geradlinig ist.

13. Mechanismusträger nach Anspruch 1,
**dadurch gekennzeichnet, dass** die Leiste (28') entlang eines jeden ihrer Längsränder Einsteckmittel (29) aufweist.
